# EUROPEAN PATENT APPLICATION

(11) **EP 4 635 298 A1**
(43) Date of publication of application: **22.10.2025**
(21) Application number: 24382414.1
(22) Date of filing: 18.04.2024
(51) Int. Cl.: A21B 1/40, A21C 13/00, A47J 37/00

(54) **METHOD AND HOUSEHOLD APPLIANCE FOR MAKING BREAD**

(71) Applicant: BSH Hausgeräte GmbH, 81739 München (DE); BSH Electrodomésticos España, S.A., 50016 Zaragoza (ES)
(72) Inventor: Calabuig Adobes, Irene, Zaragoza (ES); Rubio, Miguel, 50007 Zaragoza (ES); de Diego Castilla, Regina, 19002 Guadalajara (ES); Garcia Romeo, Daniel, 50013 Zaragoza (ES); Rojo Esteban, Lander, 50009 Zaragoza (ES)

(57) **Abstract**

The invention relates to method for making bread (11), comprising arranging a predetermined amount and number of ingredients for making a dough (3) in an agitator vessel (2), mixing the ingredients, in order to form the dough (3), allowing fermenting of the dough (3), and baking the dough (3) at a predetermined temperature for a predetermined time. Monitoring fermentation of the dough (3) by use of a VOC sensor (6) is proposed, wherein the VOC sensor (6) provides a sensor signal dependent on a concentration of VOC molecules set free from the dough (6) during fermenting, analyzing the sensor signal, in order to determine a current fermentation status of the dough (3), comparing the current fermentation status with a predefined fermentation status, and, dependent on the comparison, providing a control signal indicating that baking should be started.

## Description

The invention relates to a method for making bread, comprising arranging a predetermined amount and number of ingredients for making a dough in an agitator vessel, mixing the ingredients, in order to form the dough, allowing fermenting of the dough, and baking the dough at a predetermined temperature for a predetermined time. The invention further relates to a method of training a processing apparatus used for the method for making bread. Also, the invention relates to a computer program product, and a computer-readable medium. Finally, the invention relates to a household appliance, especially, a bread making device, comprising an agitator vessel for arranging a predetermined amount and number of ingredients for making a dough, and agitator device for mixing the ingredients arranged in the agitator vessel, in order to form the dough, a fermentation vessel allowing fermenting of the dough, and an oven for baking the dough at a predetermined temperature for a predetermined time.

In generic method for making bread, computer program products, computer-readable mediums, and generic household appliances are well-known in the state of the art. Dough fermentation, especially for homemade bread elaboration, is an increasing trend that is demanding new solution and is supposed to support a consumer obtaining a desired result. A specific topic is that the dough fermentation should have a specific fermentation status that allows the user making successfully a bread from the dough, even though the dough has been previously made at home by the user himself not considering factors necessary to achieve a successful bread.

In this regard, JP 2007-097458 A discloses a bread dough fermentation state confirmation device for determining an excess and deficiency of a fermentation status of the bread dough. The device is supposed to confirm a progress of the fermentation status in order to allow generation of a deliciousness of the bread. In this regard, the device uses a sealed container for storing the bread dough and a pressure sensor in order to sense a pressure inside of the sealed container. The pressure sensor provides a sensor signal that is supposed to be indicative of the fermentation status.

Moreover, CN 109 315 554 A discloses a fermentation device having a fermentation box body for a dough and a carbon dioxide sensor as well as a weight sensor, wherein respective sensor signals are supposed to indicate a fermentation status of the dough.

Considering the state of the art, there remain some disadvantages. Especially, the use of carbon dioxide sensors, in order to determine a fermentation status of the dough, has the disadvantage that carbon dioxide will be substantially set free from the dough usually only after overfermentation has appeared. Bubbles in the dough formed by the carbon dioxide during fermentation are growing until the bubbles tear an outer surface of the dough and set free the carbon dioxide. Usually, the dough at least partially collapses in response to setting free the carbon dioxide. This results in a poor quality of the later bread. Similar disadvantages result from the use of pressure sensors.

Therefore, it is an object of the invention to provide an improvement with regard to a determination of a specific fermentation status, which can lead to a bread of high quality.

In order to achieve the before-mentioned object, methods, a computer program product, a computer-readable medium, and a household appliance according to the independent claims are proposed. Preferable exemplary embodiments can be derived from the features of the dependent claims.

With regard to a first aspect of the invention, a generic method for making a bread is improved by monitoring fermentation of the dough by use of a VOC sensor, wherein the VOC sensor provides a sensor signal dependent on a concentration of VOC molecules set free from the dough during fermenting, analyzing the sensor signal, in order to determine a current fermentation status of the dough, comparing the current fermentation status with a predefined fermentation status, and, dependent on the comparison, providing a control signal indicating that baking should be started.

With regard to a second aspect related to a processing apparatus used for the inventive method, a method of training a processing apparatus used for the method according to the invention is proposed, wherein especially training data is generated by using the processing apparatus under predefined conditions, wherein providing different dough samples having fermentation statuses differing from each other; for each of the different dough samples: arranging a specific predetermined amount and number of ingredients for making the dough sample in an agitator vessel, mixing the ingredients, in order to form the respective dough sample, allowing fermenting of the dough sample, monitoring fermentation of the dough sample by use of a VOC sensor, wherein the VOC sensor provides a sensor signal dependent on a concentration of VOC molecules set free from the respective dough sample during fermenting, analyzing the sensor signal, in order to determine a current fermentation status of the dough sample, comparing the current fermentation status with a predefined different fermentation status provided individually for each of the dough samples, dependent on the comparison, providing a control signal for the dough sample indicating that baking should be started, and baking the dough sample at a predetermined temperature for a predetermined time, in order to form a respective bread sample; analyzing the bread samples, wherein measuring specific characteristics of the respective bread samples resulted from the corresponding dough samples; processing the characteristics of the different bread samples and the corresponding individual predefined different fermentation statuses of the respective dough samples in order to identify a correlation between the characteristics of the different bread samples and the individual predefined different fermentation statuses of the respective dough samples; generating the training data based on the identified correlation in order to train the processing apparatus; and applying the training data on a machine-leaning model using supervised learning.

With regard to a third aspect related to a computer program product, it is proposed that the computer program product comprises instructions, which, when the computer program is executed by a computer, cause the computer to carry out at least analyzing a sensor signal of a VOC sensor for monitoring fermentation of a dough for making bread, wherein the VOC sensor provides the sensor signal dependent on a concentration of VOC molecules set free from the dough during fermenting, in order to determine a current fermentation status of the dough, comparing the current fermentation status with a predefined fermentation status, and, dependent on the comparison, providing a control signal indicating that baking should be started, and/or training a processing apparatus, which especially training data is generated by using the processing apparatus under predefined conditions, wherein providing different dough samples having fermentation statuses differing from each other; for each of the different dough samples: arranging a specific predetermined amount and number of ingredients for making the dough sample in an agitator vessel, mixing the ingredients, in order to form the respective dough sample, allowing fermenting of the dough sample, monitoring fermentation of the dough sample by use of a VOC sensor, wherein the VOC sensor provides a sensor signal dependent on a concentration of VOC molecules set free from the respective dough sample during fermenting, analyzing the sensor signal, in order to determine a current fermentation status of the dough sample, comparing the current fermentation status with a predefined different fermentation status provided individually for each of the dough samples, dependent on the comparison, providing a control signal for the dough sample indicating that baking should be started, and baking the dough sample at a predetermined temperature for a predetermined time, in order to form respective bread sample; processing characteristics of the different bread samples and the corresponding individual predefined different fermentation statuses of the respective dough samples in order to identify a correlation between the characteristics of the different bread samples and individual predefined different fermentation statuses of the respective dough samples resulted by analyzing the bread samples; and generating the training data based on the identified correlation in order to train the processing apparatus.

Moreover, according to a fourth aspect, a computer-readable medium is proposed comprising instructions of the computer program product according to the invention.

With regard to a fifth aspect related to a generic household appliance, it is proposed that the household appliance comprises a VOC sensor monitoring fermentation of the dough, wherein the VOC sensor is configured to provide a sensor signal dependent on a concentration of VOC molecules set free from the dough sample during fermenting, a processing apparatus configured to analyze the sensor signal in order to determine a current fermentation status of the dough, a comparing apparatus configured to compare the current fermentation status with a predefined fermentation status, wherein the comparing apparatus is further configured to provide a control signal dependent on the comparison, indicating that baking should be started.

Among others, the invention is based on the consideration to use a VOC sensor in order to address the issue of knowing when the dough is ready to be baked. This may help the user to control the fermentation process. This allows optimal and easily reproduceable results with regard to achieving a specific fermentation status of the dough and a high quality of the later bread. Especially, poor results of quality with regard to the bread and waste of dough, especially with regard to over-fermenting, can be avoided. In this regard, VOC stands for volatile organic compound.

Contrary to the state of the art, the fermentation status of the dough is determined by detecting volatile organic compounds that are set free from the dough in a surrounding atmosphere which can be detected by the VOC sensor. The VOC sensor is configured to detected the VOC compounds, especially VOC compounds in a gaseous atmosphere which may surround the dough. The VOC sensor may be configured as a metal oxide sensor (MOX). In this regard, it should be considered that fermentation in a dough usually may include several biological reactions that are carried out by strains of Saccharomyces cerevisiae, yeast, wild yeast, lactic acid bacteria (LAB) and/or the like. In summary, these microorganisms consume at least partially available simple sugars in the flour and, in response, produce CO₂ and other components as a residue from this metabolism. This process is usually responsible for a distinctive flavor and texture of the bread. The invention avoids the use of a CO₂ sensor, which may usually rather detect beginning of over fermentation, or a pressure sensor for the control of fermentation of the dough.

In response to the before-mentioned biological reactions, numerous volatile organic compounds are released from the dough, especially set free in the surrounding atmosphere. These compounds may comprise alcohols, aldehydes, esters, ketones, acids, and/or the like. These volatile organic compounds evolve usually at the same time during the fermentation process so that their evolution can represent a fingerprint of the different statuses of the fermentation process of the dough.

Alternatively, or additionally, a distance sensor may be provided. The distance sensor may provide a distance signal dependent on a distance of the distance sensor with regard to a surface of the dough. According to an exemplary embodiment, the distance sensor may replace the VOC sensor or the distance sensor may be provided in addition with regard to the VOC sensor. The distance signal may also be indicative for a volume growth of the dough during fermenting. Especially, the distance signal may be analyzed, in order to determine the current fermentation status of the dough. This may also allow comparing the current fermentation status with a predefined fermentation status, and, dependent on the comparison, providing a control signal indicating that baking should be started. It is also possible to determine the current fermentation status of the dough more reliable if processing of the distance signal is combined with processing the sensor signal. Processing may include analyzing.

Especially, the invention allows automation of making a bread from the beginning. This can enhance the process of making bread and allows reproducing a specific kind of bread in a reliable manner.

Especially, the agitator vessel and the fermentation vessel do not need to be different kinds of vessels. It is also possible that the agitator vessel can be used as the fermentation vessel at the same time. However, different kinds of vessels may allow adapting the vessels for their specific process, for example, the agitator vessel such that the agitating process can be reliably performed, and the fermentation vessel may be adapted for providing fermentation, for example, under predefined conditions such as temperature, humidity, atmosphere and/or the like, or to provide a specific size of the dough in response for the later bread. Insofar, the agitator vessel may be formed by a bowl, wherein the fermentation vessel may be formed by a rectangular box or the like.

The number of ingredients and their specific amounts may be provided by the user or a respective supplying apparatus which is configured to supply the ingredients with regard to their specific amounts into the agitator vessel. As far as the ingredients are provided in the agitator vessel, mixing of the ingredients can be started. This can be achieved by an agitator device. The agitator device may be automatically started by a specific agitator control signal. The agitator control signal may be provided by a control apparatus controlling the household appliance and its devices and/or apparatuses, respectively. Mixing can be provided under specific conditions such as temperature, atmosphere and/or the like for a specific predetermined time.

After having finished the mixing step, fermenting of the dough is allowed. In this regard, the dough may remain in the agitator vessel, or it may be moved to a specific fermentation vessel. Especially, the dough may be shaped in a specific form. After having finished the fermentation step, the dough may be treated by a predetermined temperature for a predetermined time, preferably in a specific oven. This treatment step has as a result the bread.

In an exemplary embodiment, it is proposed that a metal oxide sensor is used as the VOC sensor. The metal oxide sensor is suited very well for detecting volatile organic compounds in a gaseous atmosphere. Especially, it is possible to adapt the metal oxide sensor such that specific volatile organic compounds can be detected with high accuracy.

Moreover, according to another exemplary embodiment, it is proposed that analyzing the sensor signal is established by a processing apparatus, which is configured to use a machine-leaning model based on supervised learning, in order to determine the current fermentation status of the dough. This embodiment is among others based on the consideration that determining the fermentation status of the dough can be improved by using machine learning. In this regard, the inventive method according to the first aspect allows generating a specific raw data set for a specific bread quality independent from the predefined fermentation status of the dough. In this regard, the sensor signal is indicative of a specific current fermentation status of the dough.

The inventors found that the accuracy of determining the fermentation status of the dough can be enhanced by using a machine-learning algorithm which is preferably trained with specific training data considering different bread qualities and fermentation statuses of the dough to be baked. In this regard, the processing apparatus is enabled to determine the fermentation status of the dough with high accuracy because of its training with the training data which are also part of the invention as detailed further below.

The inventive method may be controlled by a control apparatus which may be part of the household appliance. The control apparatus may be integral with the processing apparatus, or it may be a separate component. The processing apparatus and/or the control apparatus may be especially established as a hardware circuitry, a computer running a program or the like. The processing apparatus may be a hardware circuitry, a computer running a program or combinations thereof or the like. So, the processing apparatus and/or the control apparatus may also be provided as a chip such as a semiconductor chip which form a component of the household appliance or any other device, or it may be integral therewith. The control apparatus, or the processing apparatus may receive and process the sensor signal and/or the distance signal.

Processing may further include that data received from processing the sensor signal or the distance signal, respectively, may be used to indicate a remaining time up to which fermentation is sufficient so that that baking should be started. This may be indicated by the control signal. However, it may be also possible that the control signal is indicative of the time when baking should be started. A combination of the before-mentioned options may be possible. Processing may either include an estimation for the remaining time or the time when baking should be started.

It is further proposed that the supervised-learning is provided by a machine-learning algorithm using a neural network. The neural network allows a specific learning process so that the operation of the processing apparatus can be improved during its use. The processing apparatus can be based on a standard neural network so that it can be easily provided.

In this context, an artificial neural network can be understood as a software code or a compilation of several software code components, wherein the software code may comprise several software modules for different functions, for example one or more encoder modules and one or more decoder modules. An artificial neural network can be further understood as a non-linear model or algorithm that maps an input to an output, wherein the input is given by an input feature vector or an input sequence and the output may be an output category for a classification task or a predicted sequence. For example, the artificial neural network may be provided in a computer-readable way, for example, stored on a storage medium of the household appliance, in particular of the at least one computing apparatus. The neural network comprises several modules including the encoder module and the at least one decoder module. These modules may be understood as software modules or respective parts of the neural network. A software module may be understood as software code functionally connected and combined to an apparatus. A software module may comprise or implement several processing steps and/or data structures. The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

In the context of the present disclosure, a dough fermentation status detection algorithm may be understood as a computer algorithm, which is able to identify one or more dough fermentation statuses within a provided input dataset, for example input data, by specifying respective bounding boxes or regions of interest (ROI), and, in particular, assigning a respective dough fermentation status class to each of the bounding boxes, wherein the object classes may be selected from a predefined set of object classes. Therein, assigning a dough fermentation status class to a bounding box may be understood such that a corresponding confidence value or probability for the object identified within the bounding box being of the corresponding object class is provided. For example, the algorithm may provide such a confidence value or probability for each of the dough fermentation status classes for a given bounding box. Assigning the dough fermentation status class may for example include selecting or providing the dough fermentation status class with the largest confidence value or probability. Alternatively, the algorithm can specify only the bounding boxes without assigning a corresponding dough fermentation status class.

According to an exemplary embodiment, it is further proposed that, during a predetermined operation, back propagation is provided. The predetermined operation can be a specific portion of the operation of the household appliance, for example a finish of the operation, a maintenance or the like. It can be also manually actuated by the user. The back propagation can be achieved by using data which is acquired during the operation of the household appliance. This allows changing, especially updating, the analysing apparatus during its intended use.

According to an exemplary embodiment, it is proposed to analyse a bread made according to the invention in order to achieve current training data and train the processing apparatus with the current training data. This allows providing a processing apparatus which is enabled to reliably determine the fermentation status of the dough.

Moreover, it is proposed that training of the processing apparatus is repeated after making any single bread. In this regard, training of the processing apparatus can be improved. It can be provided that training of the processing apparatus can be repeated after making every single bread. However, it is also possible that the training may be repeated only after a predetermined amount of making single breads.

Moreover, it is proposed that fermenting is provided in a space that is at least partially separated from a surrounding atmosphere. The space may be formed by the fermentation vessel or, if applicable, by the agitator vessel. The vessel may be completely separated from a surrounding atmosphere. However, the vessel may have an opening so that volatile organic compounds accumulating inside the vessel can be drained through the opening to an outer surrounding atmosphere. Preferably, the VOC sensor may be arranged inside the vessel. However, it is generally not necessary that the vessel is separated from the surrounding atmosphere. It can be provided that the VOC sensor is arranged near the opening of the vessel so that volatile organic compounds set free from the dough can be reliably detected by the sensor.

According to the second aspect of the invention and an exemplary embodiment, which is directed to training the processing apparatus, the bread samples are analyzed which may comprise measuring sizes and/or dimensions of the bread, the weight of the bread, determining a volume and/or a cross sections of alveolus in the bread, especially at a cut cross section of the bread, and/or the like. For every single bread sample the predefined fermentation status is known, wherein the predefined fermentation status corresponds to the control signal which is emitted from a comparison apparatus comparing the current fermentation status with the predefined fermentation status allocated to the specific dough sample. The comparison apparatus may be included by the processing apparatus. These values may form specific characteristics of the respective bread sample. The characteristics of the different bread samples and the corresponding individual predefined different fermentation statuses of the respective dough samples are processed in order to identify a correlation between the characteristics of the different bread samples and the individual predefined different fermentation statuses of the respective dough samples. Based hereon, the training data is generated. This means that the training data may be generated based on the identified correlation. Then, the training data may be used to train the processing apparatus. This may imply that the training data are applied on a machine-learning model using supervised learning.

In this regard, the processing apparatus can be trained such that, depended on the VOC sensor signal, a suitable fermentation status of the dough can be determined and the processing apparatus can compare this current fermentation status with a predefined fermentation status resolved by the training process of the processing apparatus in order to provide the control signal. This allows determining a suitable fermentation status of the dough which allows receiving a bread of high quality. Contrary to the state of the art, detection of CO₂ or other dimensions of the dough need not be considered and so a suitable fermentation status can be determined in order to make a bread of high quality.

According to a third aspect of the present invention, there are provided one or more computer program products comprising computer-executable components which, when the program is run on a computer, are configured to carry out the respective methods as referred herein above. The above computer-program product may comprise computer-executable components which, when the program is run on a computer, perform the method aspects mentioned above in connection with the method aspects. The above computer program product may be embodied as a computer-readable storage medium.

The computer program product includes a program for a processing device which can be a computer, a computation apparatus, especially a digitized, preferably binary operating processing unit, or the like. The program includes instructions which, when executed on the processing device, perform the method according to the first and the second aspect. Consequently, the computer program product comprises, according to an exemplary embodiment, a computer-readable medium, on which software code portions of the computer program product are stored. The computer-readable medium may be a storage device, such as a RAM, a CD, a DVD, combinations thereof, or the like. According to a further aspect, the program product is directly loadable into an internal memory of the processing device. The internal memory may be, for example, a RAM or the like.

A computer may in particular be understood as a data processing device, which comprises processing circuitry. The computer can therefore in particular process data to perform computing operations. This may also include operations to perform indexed accesses to a data structure, for example a look-up table (LUT). In particular, the computer may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computer may also include one or more processors, for example one or more microprocessors, one or more central processing units, CPU, one or more graphics processing units, GPU, and/or one or more signal processors, in particular one or more digital signal processors, DSP. The computer may also include a physical or a virtual cluster of computers or other of said apparatuses. In various embodiments, the computer includes one or more hardware and/or software interfaces and/or one or more memory apparatuses. A memory apparatus may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

According to another exemplary embodiment, it is proposed that generating the training data comprises a classification algorithm comprising at least a logistic regression or a support vector machine. With these classification algorithms the training process or the process to generate the training data can be improved.

According to another exemplary embodiment, it is proposed that generating the training data comprises principal component analysis. Principal component analysis can be used in exploratory data analysis and for making predictive models. It can be used for dimension reduction by projecting data, while preserving as much of the data's variation as possible. Principal Component Analysis (PCA) is described for instance by G. H. Dunteman: Principal Component Analysis. Sage Publications, 1989, or L. Fahrmeir, A. Hamerle, G. Tutz (Hrsg.): Multivariate statistische Verfahren, New York 1996, or A. Handl, T. Kuhlenkasper: Multivariate Analysemethoden. Theorie und Praxis mit R, 3. Auflage. Springer, Berlin 2017, ISBN 978-3-662-54753-3.

The teaching of the present invention can be readily understood and at least some additional specific details will appear by considering the following detailed description of at least one exemplary embodiment in conjunction with the accompanying joints, wherein showing:
Fig. 1 a schematic front view of a bread making device;
Fig. 2 a schematic front view of a lid of the bread making device according to Fig. 1;
Fig. 3 a schematic side view of the bread making device according to Fig. 1;
Fig. 4 a schematic cross section of a cut of a bread made by the bread making device according to Fig. 1;
Fig. 5 a schematic diagram showing a fermentation process of a dough used for making the bread according to Fig. 4;
Fig. 6 a schematic diagram showing a concentration of ethanol during fermentation of the dough according to Fig. 5;
Fig. 7 a schematic diagram showing a principal component analysis using a first VOC sensor and plural different temperatures during fermentation;
Fig. 8 a schematic diagram showing a principal component analysis using a second VOC sensor and plural different temperatures during fermentation;
Fig. 11 a schematic diagram showing a third heating profile for the second VOC sensor;
Fig. 12 a schematic diagram showing a test based on a processing apparatus using a neural network;
Fig. 13 a schematic diagram showing a result of classification;
Fig. 14 a schematic diagram showing likelihoods for classification according to Fig. 12 and 13.
Fig. 15 a schematic arrangement for producing training data for a processing apparatus according to Fig. 12; and
Fig. 16 a schematic flow diagram showing training of the processing apparatus.

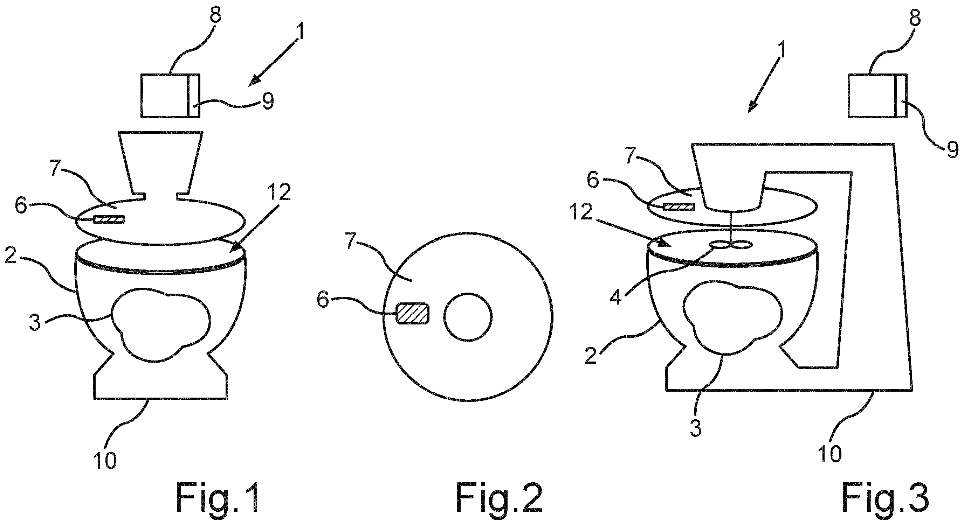

Fig. 1 shows a schematic front view of a bread making machine 1 as a household appliance. The bread making machine 1 has a housing 10 comprising an agitator vessel 2. The agitator vessel 2 provides a space 12 for arranging a predetermined amount and number of ingredients for making a dough 3. Moreover, the bread making machine 1, especially the housing 10, comprises a lid 7 arranged above an upper opening of the agitator vessel 2 and being connected with the housing 10. The lid 7 holds a VOC sensor 6 which is arranged such that volatile organic compounds which are set free from the dough 3 during fermenting can be detected. In the present embodiment, the lid 7 does not close the opening of the vessel 2 completely so that volatile gaseous compounds (VOC) produced by the dough 3 during fermenting can leave the inside of the vessel. However, in other embodiments, it may be possible that the lid 7 at least partially closes the opening of the vessel 2. Fig. 2 shows a schematic top view of the lid 7 holding the VOC sensor 6. Fig. 3 shows a schematic side view of the bread making device 1 according to fig. 1.

As can be seen from Figs. 1 and 3, the agitator vessel 2 has the space 12, in which the ingredients forming the later dough 3 can be placed. Fig. 3 further shows an agitator device 4 projecting into the space 12 so that the ingredients can be mixed in order to form the dough 3.

The bread making device 1 comprises also a processing apparatus 8 and a comparison apparatus 9. The processing apparatus 8 and the comparison apparatus 9 are communicatively connected with each other. In the present embodiment, they are integral with each other. The processing apparatus 8 is further communicatively connected with the VOC sensor 6 so that a sensor signal of the VOC sensor 6 can be received from the processing apparatus 8.

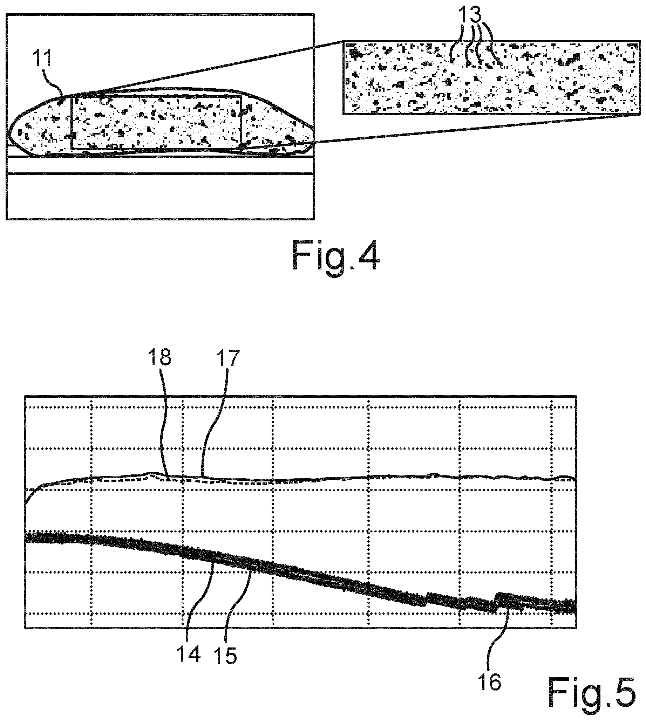

Fig. 4 shows a schematic cross section of a cut of a bread 11 made by the bread making machine 1 according to Figs. 1 through 3. In the cross section are visible alveoli 13 which are usually filled which the volatile gaseous compounds produced during fermenting of the dough 3. As can be seen, the alveoli 13 have different diameters or cross section, respectively. This is analyzed and classified according to the following table 1.

**Table 1**

| Diameter [mm] | number | S | %S total |
|---|---|---|---|
| 0.0-0.01 | 0 | 0.00 | 0.00 |
| 0.01 -0.1 | 139 | 4.04 | 25.24 |
| 0.1 - 1.0 | 8 | 1.75 | 10.95 |
| 1.0 - 10.0 | 0 | 0.00 | 0.00 |
| sum | 147 | 5.79 | 36.19 |
| | | | |
| | | | 36.1875 |

The dough 3 according to the before-mentioned embodiment has been fermented at a temperature of about 25°C. Considering these conditions, fig. 5 shows a schematic diagram showing the fermentation process of the dough 3 used for making the being bread 11 according to fig. 4. The abscissa is allocated to the time, wherein the left ordinate is allocated to the temperature. Three graphs 14, 15, 16 showing distance sensor signals of three distance sensors are arranged at the lid 7 and provide distance sensor signals dependent on a distance between the lid 7 and an upper surface of the dough 3 arranged in the vessel 2 during fermenting. As can be seen from these graphs, the dough 3 grows for a time range of about four and a half hours. Later on, the growth of the dough 3 appears to be limited because the structure of the dough 3 collapses caused by overfermentation which also produces the liberation of gas contained inside of the dough 3.

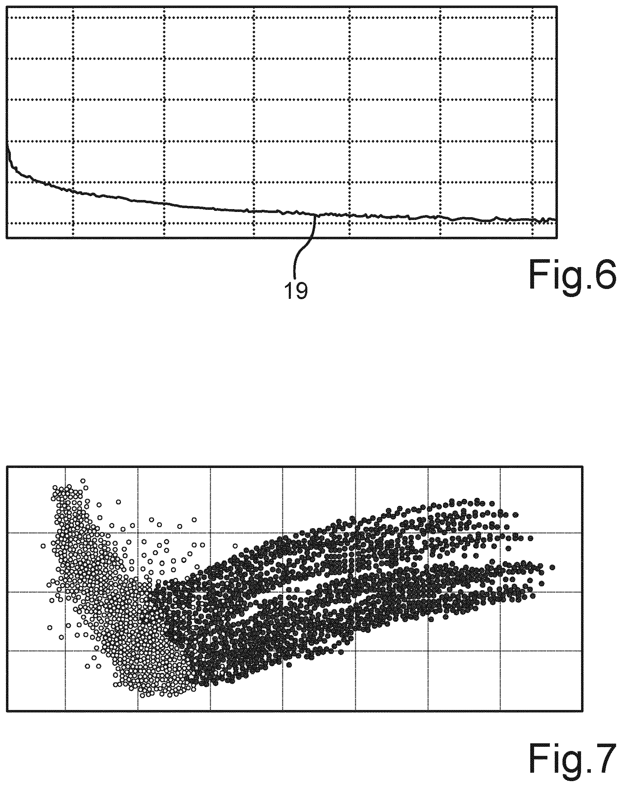

Graphs 17 and 18 are temperature signals of respective temperature sensors, wherein the graph 17 shows a temperature of the dough 3 during fermenting, and the graph 18 shows an ambient temperature of the atmosphere surrounding the dough 3. Fig. 6 shows a schematic diagram showing a concentration of ethanol during fermentation of the dough 3 according to fig. 5. An abscissa is allocated to the time and has the same time axis as in fig. 4. The ordinate is allocated to a resistance ratio of the VOC sensor 6. A graph 19 shows the level of ethanol concentration. As can be seen from the graph 19, the ethanol concentration decreases as the growth of the dough 3 decelerates. This is a result of over fermenting conditions.

Fig. 7 shows a schematic diagram showing a principal component analysis using a first VOC sensor 6 and plural different temperatures during fermentation. The before-mentioned information allows determining physical changes within the dough 3 corresponding to different statuses with regard to the fermentation process of the dough 3. Moreover, it is even possible to determine a time range left to reach the over-fermentation status. This allows using this as a countdown to advise the user when to start the baking process.

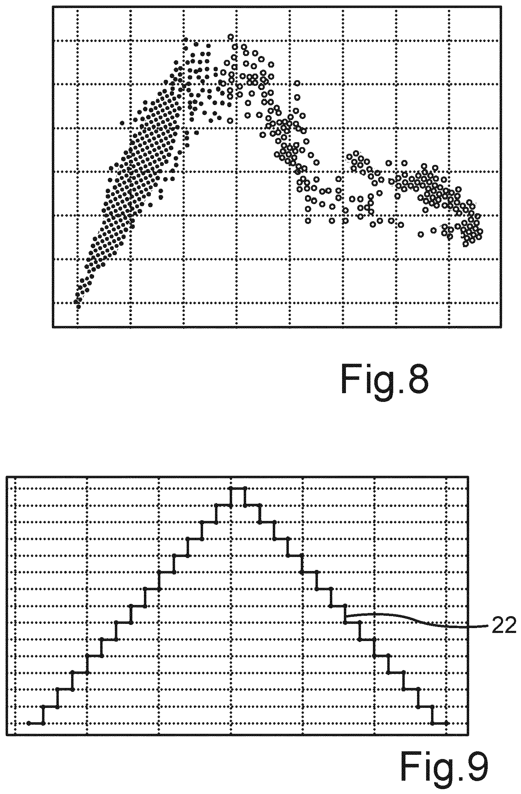

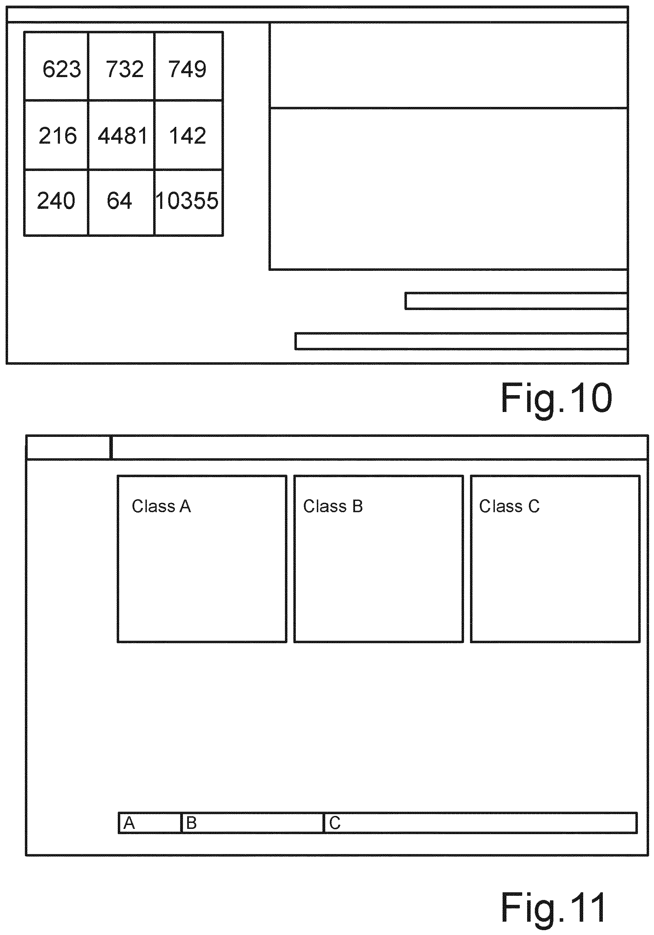

The VOC sensor 6 is preferably formed by a metal oxide sensor that may be customized to track ethanol and/or other VOC related to the fermentation process. In a first embodiment, the VOC sensor 6 is formed by a specific first exemplary VOC sensor which is subjected with heat profiles according to Figs. 9 and 10. Fig. 7 shows a principal component analysis of the resulted data. The points in fig. 7 of different shades represent different dough 3 statuses during the fermentation process.

Fig. 8 shows a schematic diagram showing a principal component analysis using a second VOC sensor 6 and plural different temperatures during fermentation. In this embodiment, the VOC sensor 6 may be customized with a heating profile according to fig. 9. The respective principal component analysis is shown in fig. 8. The before-mentioned consideration allows to provide an algorithm using several machine-learning methodologies.

In the following, a neural network of the processing apparatus 8 is operated with the VOC sensor 6 formed by the first exemplary VOC sensor after performing data normalization, cleaning and labeling. However, in other embodiments, other VOC sensors may be used, such as the second exemplary VOC sensor. The results of the principal component analysis can be used to train the machine-learning.

In this regard, fig. 10 shows a schematic diagram showing a test based on the processing apparatus 8 using a neural network, and fig. 11 showing in a schematic diagram a result of the classification provided by the processing apparatus 8. The algorithm shown in fig. 10 is just an example of the possibilities of combining the sensor signals with machine-leaning techniques. Further training and tuning are proposed to be made in order to optimize the performance of the processing apparatus 8. Fig. 11 shows three classes, namely a class A allocated to optimal fermentation, a class B allocated to over fermenting, and a class C allocated to fermenting.

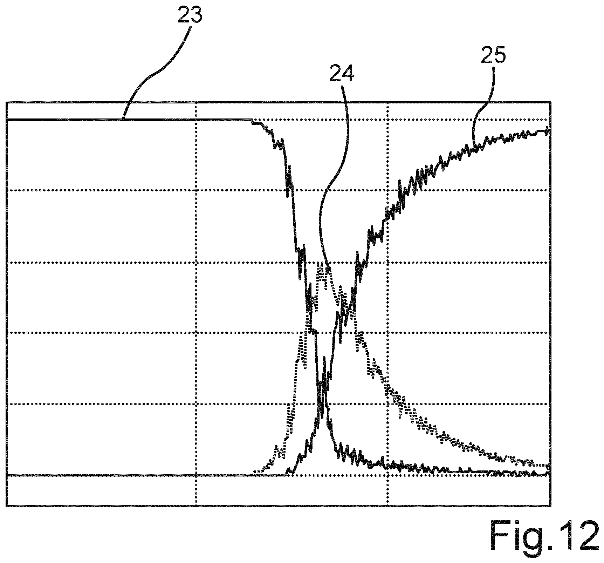

Fig. 12 shows in a schematic diagram a preliminary result of a validation. In fig. 12, the abscissa is allocated to the time, whereas the ordinate is allocated to a class probability. A graph 23 is allocated to class C showing the respective probability over time. A graph 24 is allocated to class A showing the probability over time. Correspondingly, a graph 25 is allocated to class B indicating the respective class probability.

The same approach can be made with the second VOC sensor 6 formed by the second exemplary VOC sensor. Although, another approach could be applied to the machine-leaning providing the user with a more useful information using, for example, time series for casting techniques in order to calculate remaining time until optimal fermentation status of the dough 3.

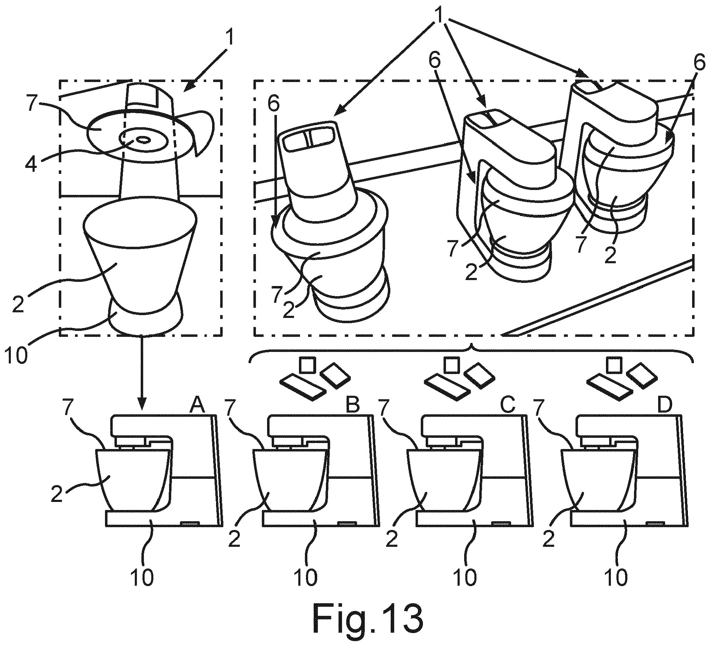

Fig. 13 shows a schematic arrangement for producing training data for the processing apparatus 8 according to fig. 10. As can be seen from fig. 13, four bread making machines 1 according to Figs. 1 through 3 are provided. Every agitator vessel 2 of the bread making machines 1 receives the same ingredients with regard to number and amount of the ingredients. Agitating is provided and after agitating has finished, fermentation of the respective dough sample 3 in the respective agitator vessel 2 is allowed.

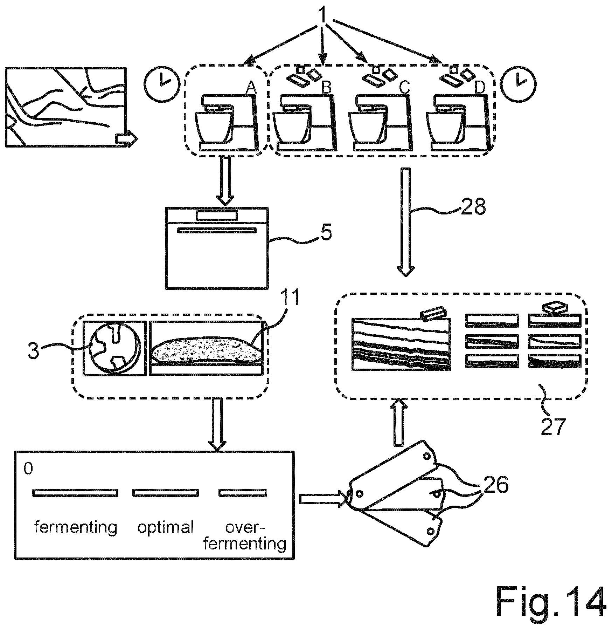

The agitator vessel 2 in this embodiment serves also as fermentation vessel. Fermentation is stopped at different times with regard to the different bread making machines 1 and the respective results of the dough samples 3 are baked in the oven 5. As a result, respective bread samples 11 are achieved as shown in the schematic flow diagram according to fig. 14 showing training of the processing apparatus 8.

As can be seen from fig. 14, a first dough sample 3 is provided by a first of the bread making devices 1, indicated as A in fig. 14. For this dough sample 3, a time t₁ for fermentation was allowed. A second dough sample 3 is provided by a second of the bread making devices 1 indicated by B in fig. 14. The time for fermentation of this dough sample 3 has been determined at a time t₂. A third dough sample 3 is provided by the third of the bread making devices 1, indicated by C in fig. 14. For this dough sample 3, a fermentation time t₃ has been predetermined. Finally, a fourth dough sample 3 is provided by a fourth of the bread making devices 1 indicated by D in fig. 14. For this dough sample 3, a fermentation time t₄ has been determined. In this embodiment, t₁ < t₂ < t₃ < t₄. Each of the before-mentioned respective bread samples 11 are investigated with regard to size and number of alveoli as already detailed with regard to fig. 4. In this embodiment, the dough samples have the same constitution. However, it may be possible in alternative embodiments that at least some of the dough samples differ from each other with regard their composition. The results of this analysis are subjected to the training of the processing apparatus 8 according to figs. 12 through 14, and labels 26 for training data are resulted. The respective fermentation statuses of the dough samples 3 are supplied according to an error 28 to a data collection 27 as well as the labels 26. The data collection 27 serves for training the processing apparatus 8, especially its neural network.

In the before-mentioned embodiments, the VOC sensor 6 is formed by a metal oxide sensor in order to detect a specific "fingerprint" of the mixing of the volatiles that appear with respect to each class according to fig. 11. The metal oxide sensor can be customized by changing its operation temperature and its timings in order to enhance selectivity and boost sensitivity towards the desired specific predefined volatile compounds. This is shown by Fig. 11 with respective graphs 20, 21, 22 showing respective temperature profiles. In the present embodiments, a sweep in temperatures is used in order to enhance the performance of the VOC sensors 6 with regard to fermentation flavors, or the volatile gaseous compounds, respectively.

Summarized, the invention allows determining a specific or optimal fermentation status of the dough 3 in order to allow making a bread 11 of high quality. The bread 11 after having been baked shall have alveoli of a specific size and number in order to achieve a high quality.

The before-mentioned embodiments shall not be regarded as limiting the scope of the invention. Especially, they are presented only for the purpose of explaining the invention.

### List of Reference Characters

- 1: bread making device
- 2: agitator vessel
- 3: dough
- 4: agitator device
- 5: oven
- 6: VOC sensor
- 7: lid
- 8: processing apparatus
- 9: comparison apparatus
- 10: housing
- 11: bread
- 12: space
- 13: alveolus
- 14: graph
- 15: graph
- 16: graph
- 17: graph
- 18: graph
- 19: graph
- 20: graph
- 21: graph
- 22: graph
- 23: graph
- 24: graph
- 25: graph
- 26: label
- 27: data collection
- 28: error

## Claims

1. A method for making bread (11), comprising arranging a predetermined amount and number of ingredients for making a dough (3) in an agitator vessel (2), mixing the ingredients, in order to form the dough (3), allowing fermenting of the dough (3), and baking the dough (3) at a predetermined temperature for a predetermined time, **characterized by**
monitoring fermentation of the dough (3) by use of a VOC sensor (6), wherein the VOC sensor (6) provides a sensor signal dependent on a concentration of VOC molecules set free from the dough (6) during fermenting, analyzing the sensor signal, in order to determine a current fermentation status of the dough (3), comparing the current fermentation status with a predefined fermentation status, and, dependent on the comparison, providing a control signal indicating that baking should be started.

2. The method according to claim 1, **characterized in that** a metal oxide sensor is used as the VOC sensor (6).

3. The method according to anyone of the preceding claims, **characterized in that** analyzing the sensor signal is established by a processing apparatus (8), which is configured to use a machine-leaning model based on supervised learning, in order to determine the current fermentation status of the dough (3).

4. The method according to claim 3, **characterized in that** the supervised learning is provided by a machine-learning algorithm using a neural network.

5. The method according to anyone of the preceding claims, **characterized by** analyzing the bread (11) made according to the preceding claims in order to achieve current training data, and training the processing apparatus (8) with the current training data.

6. The method according to claim 5, **characterized in that** training of the processing apparatus (8) is repeated after making any single bread (11).

7. The method according to anyone of the preceding claims, **characterized in that** fermenting is provided in a space (12) that is at least partially separated from a surrounding atmosphere.

8. A method of training a processing apparatus (8) used for the method according to anyone of the preceding claims, wherein training data is generated by using the processing apparatus (8) under predefined conditions, wherein
- providing different dough samples (3) having fermentation statuses differing from each other;
- for each of the different dough samples (3):
• arranging a specific predetermined amount and number of ingredients for making the dough sample (3) in an agitator vessel (2),
• mixing the ingredients, in order to form the respective dough sample (3),
• allowing fermenting of the dough sample (3),
• monitoring fermentation of the dough sample (3) by use of a VOC sensor (6), wherein the VOC sensor (6) provides a sensor signal dependent on a concentration of VOC molecules set free from the respective dough sample (3) during fermenting,
• analyzing the sensor signal, in order to determine a current fermentation status of the dough sample (3),
• comparing the current fermentation status with a predefined different fermentation status provided individually for each of the dough samples (3),
• dependent on the comparison, providing a control signal for the dough sample (3) indicating that baking should be started, and
• baking the dough sample (3) at a predetermined temperature for a predetermined time, in order to form a respective bread sample (11);
- analyzing the bread samples (11), wherein measuring specific characteristics of the respective bread samples (11) resulted from the corresponding dough samples (3);
- processing the characteristics of the different bread samples (11) and the corresponding individual predefined different fermentation statuses of the respective dough samples (3) in order to identify a correlation between the characteristics of the different bread samples (11) and the individual predefined different fermentation statuses of the respective dough samples (3);
- generating the training data based on the identified correlation in order to train the processing apparatus (8); and
- applying the training data on a machine-leaning model using supervised learning.

9. The method according to claim 8, **characterized in that** the processing apparatus (8) is configured to use a mathematic model based on supervised learning which is trained with the training data, in order to enable the processing apparatus (8) determining the current fermentation status of the dough (3).

10. The method according to claim 8 or 9, **characterized in that** generating the training data comprises a classification algorithm comprising at least a logistic regression or a support vector machine.

11. The method according to one of the claims 8 through 10, **characterized in that** generating the training data comprises principal component analysis.

12. The method according to one of the claims 8 through 11, **characterized in that** the predetermined amount and number of ingredients are the same for each of the dough samples (3).

13. A computer program product comprising instructions, which, when the computer program is executed by a computer, cause the computer to carry out
at least analyzing a sensor signal of a VOC sensor (6) for monitoring fermentation of the dough (3), wherein the VOC sensor (6) provides the sensor signal dependent on a concentration of VOC molecules set free from the dough (3) during fermenting, in order to determine a current fermentation status of the dough (3), comparing the current fermentation status with a predefined fermentation status, and, dependent on the comparison, providing a control signal indicating that baking should be started, and/or
training a processing apparatus (8), which training data is generated by using the processing apparatus (8) under predefined conditions, wherein
- providing different dough samples (3) having fermentation statuses differing from each other;
- for each of the different dough samples (3):
• arranging a specific predetermined amount and number of ingredients for making the dough sample (3) in an agitator vessel (2),
• mixing the ingredients, in order to form the respective dough sample (3),
• allowing fermenting of the dough sample (3),
• monitoring fermentation of the dough sample (3) by use of a VOC sensor (6), wherein the VOC sensor (6) provides a sensor signal dependent on a concentration of VOC molecules set free from the respective dough sample (3) during fermenting,
• analyzing the sensor signal, in order to determine a current fermentation status of the dough sample (3),
• comparing the current fermentation status with a predefined different fermentation status provided individually for each of the dough samples (3),
• dependent on the comparison, providing a control signal for the dough sample (3) indicating that baking should be started, and
• baking the dough sample (3) at a predetermined temperature for a predetermined time, in order to form respective bread sample (11);
- processing characteristics of the different bread samples (11) and the corresponding individual predefined different fermentation statuses of the respective dough samples (3) in order to identify a correlation between the characteristics of the different bread samples (11) and individual predefined different fermentation statuses of the respective dough samples (3) resulted by analyzing the bread samples (11); and
- generating the training data based on the identified correlation in order to train the processing apparatus (8).

14. A computer readable medium comprising instructions of the computer program product according to claim 13.

15. A household appliance (1), especially a bread making device, comprising an agitator vessel (2) for arranging a predetermined amount and number of ingredients for making a dough (3), an agitator device (4) for mixing the ingredients arranged in the agitator vessel (2), in order to form the dough (3), a fermentation vessel allowing fermenting of the dough (3), and an oven (5) for baking the dough (3) at a predetermined temperature for a predetermined time,
**characterized by**
a VOC sensor (6) monitoring fermentation of the dough (3), wherein the VOC sensor (6) is configured to provide a sensor signal dependent on a concentration of VOC molecules set free from the dough (3) during fermenting, a processing apparatus (8) configured to analyze the sensor signal, in order to determine a current fermentation status of the dough (3), a comparison apparatus (9) configured to compare the current fermentation status with a predefined fermentation status, wherein the comparison apparatus (9) is further configured to provide a control signal dependent on the comparison, indicating that baking should be started.
